# EUROPEAN PATENT SPECIFICATION

(11) **EP 4 385 871 B1**
(45) Date of publication and mention of the grant of the patent: **01.10.2025**
(21) Application number: 23188914.8
(22) Date of filing: 01.08.2023
(51) Int. Cl.: B62K 23/06, B60L 1/00, B60L 7/26, B60L 15/20, B62K 23/04, B62K 11/14

(54) **CONTROL SYSTEM FOR STRADDLED ELECTRIC VEHICLE AND STRADDLED ELECTRIC VEHICLE**
STEUERUNGSSYSTEM FÜR EIN GRÄTSCHSITZ-ELEKTROFAHRZEUG UND GRÄTSCHSITZ-ELEKTROFAHRZEUG
SYSTÈME DE COMMANDE POUR VÉHICULE ÉLECTRIQUE À ENFOURCHER ET VÉHICULE ÉLECTRIQUE À ENFOURCHER

(30) Priority: 15.12.2022 JP 2022200031
(43) Date of publication of application: 19.06.2024
(73) Proprietor: Yamaha Hatsudoki Kabushiki Kaisha, Iwata-shi, Shizuoka 438-8501 (JP)
(72) Inventor: MIYASHIRO, Shidehiko, Iwata-shi, 4388501 (JP)
(74) Representative: Studio Torta S.p.A.

(56) References cited:
- EP-A1- 3 730 337
- EP-B1- 2 660 093
- EP-B1- 2 910 401
- WO-A1-2019/187518
- REKLUSE MOTOR SPORTS: "Left Hand Rear Brake Kit Installation.", 10 October 2016 (2016-10-10), XP093114752, Retrieved from the Internet <URL:https://www.youtube.com/watch?v=Tasow3SEqUU> [retrieved on 20231221]
- CROSS TRAINING ENDURO: "Clake Two review: combined clutch/lefthand rear brake setup!?Cross Training Enduro", 13 January 2015 (2015-01-13), XP093114753, Retrieved from the Internet <URL:https://www.youtube.com/watch?v=86qN3anUTy8> [retrieved on 20231221]
- REKLUSE MOTOR SPORTS: "Left Hand Rear Brake Kit Installation.", 10 October 2016 (2016-10-10), XP93114752, Retrieved from the Internet <URL:https://www.youtube.com/watch?v=Tasow3SEqUU> [retrieved on 20231221]

## Description

### TECHNICAL FIELD

The present invention relates to a control system for a straddled electric vehicle and also relates to a straddled electric vehicle.

### PRIOR ART

Publication of Japan Patent No. 6946549 discloses a straddled electric vehicle that includes an electric motor, a throttle grip disposed on a right handle grip, a brake lever disposed directly in front of a left handle grip, and an operating lever disposed directly behind the left handle grip. A drive force of the electric motor is controlled through the throttle grip and the operating lever.

An operator of the straddled electric vehicle disclosed in Publication of Japan Patent No. 6946549, when operating the operating lever during traveling, is required to operate the operating lever by the thumb of the left hand holding the left handle grip; hence, the thumb of the left hand holding the left handle grip inevitably separates away from the left handle grip. Because of this, it is concerned that the force of holding the left handle grip is weakened when the operating lever is operated during traveling. Besides, it is difficult to simultaneously operate the brake lever and the operating lever during traveling.

EP 3 730 337 Al discloses the following features of claim 1; a control system for a straddled electric vehicle including an electric motor for driving a vehicle, the control system comprising:a steering device including a first handle grip, a second handle grip, and a brake lever, the second handle grip being disposed on an opposite side of the first handle grip with reference to a center in a vehicle width direction, a first operating member for controlling a drive force of the electric motor;a second operating member for reducing either the drive force or a regenerative brake force of the electric motor, the second operating member made in shape of a lever, and a control device controlling the drive force of the electric motor in accordance with operating the first operating member, the control device reducing either the drive force or the regenerative brake force of the electric motor in accordance with operating the second operating member; wherein the steering device further includes a handlebar.

### DESCRIPTION OF THE INVENTION

It is an object of the present invention to provide a control system for a straddled electric vehicle, whereby an operating member for controlling a drive force of an electric motor can be enhanced in operability.

A control system for a straddled electric vehicle according to an aspect of the present invention is a control system for a straddled electric vehicle including an electric motor for driving a vehicle. The control system for a straddled electric vehicle includes a steering device, a first operating member, a second operating member, and a control device. The steering device includes a first handle grip, a second handle grip disposed on an opposite side of the first handle grip with reference to a center in a vehicle width direction, and a brake lever disposed directly in front of the second handle grip. The first operating member is an operating member for controlling a drive force of the electric motor. The second operating member is an operating member for reducing either the drive force or a regenerative brake force of the electric motor. The second operating member is made in shape of a lever and is disposed directly above the brake lever. The control device controls the drive force of the electric motor in accordance with operating the first operating member and reduces either the drive force or the regenerative brake force of the electric motor in accordance with operating the second operating member.

In the control system for a straddled electric vehicle according to the present aspect, the second operating member, provided for reducing either the drive force or the regenerative brake force of the electric motor, is disposed directly above the brake lever. Accordingly, it is possible to inhibit occurrence of such a condition that, when operating the second operating member during traveling, an operator unintentionally releases the thumb of a hand operating the second operating member away from the second handle grip; besides, the operator is enabled to simultaneously operate the brake lever and the second operating member. As a result, the second operating member can be enhanced in operability.

The second operating member may be lesser in dimension than the brake lever in the vehicle width direction. In this case, it is made easier for the operator to simultaneously operate the brake lever and the second operating member by either of the hands.

The second operating member may be disposed in adjacent to the brake lever in an up-and-down direction. In this case, it is made easier for the operator to simultaneously operate the brake lever and the second operating member.

The second operating member may have a pivot center different from a pivot center of the brake lever. In this case, flexibility in positional arrangement of the second operating member is enhanced; hence, flexibility in design is enhanced. For example, when the pivot center of the second operating member is disposed near the second handle grip, the second operating member can be enhanced in operability; simultaneously, the second operating member can be made compact in dimension in the vehicle width direction.

The pivot center of the second operating member may be located in vicinity of the pivot center of the brake lever. In this case, it is made easier for the operator to simultaneously operate the brake lever and the second operating member by either of the hands.

The second operating member may extend approximately in parallel to the brake lever in a vehicle plan view. In this case, the second operating member is enabled to pivot in a wider range; hence, the second operating member can be enhanced in operability.

The brake lever may include a finger hooked portion on which a first finger of an operator is hooked. The second operating member may be disposed further on an inner side than the finger hooked portion of the brake lever in the vehicle width direction. In this case, the operator is enabled to operate the brake lever and the second operating member by different fingers. Besides, when the operator operates the brake lever, physical interference is unlikely to occur between the second operating member and the finger of the hand for braking operation.

The second operating member may include a finger hooked portion on which a second finger of the operator, which is different from the first finger, is hooked. The finger hooked portion of the second operating member may be disposed at least in part further on a front side than the finger hooked portion of the brake lever. In this case, for instance, the operator is enabled to easily hook the index finger on the second operating member, while hooking the middle finger on the finger hooked portion of the brake lever. Besides, the operator is enabled to easily operate only the brake lever, while hooking the index finger on the second operating member. By contrast, the operator is also enabled to easily operate only the second operating member, while hooking the middle finger on the brake lever.

The brake lever may protrude forward from the finger hooked portion of the second operating member in a vehicle plan view. In this case, the operator is enabled to put the finger, hooked on the finger hooked portion of the second operating member, on the upper surface of the brake lever; hence, the operator can stably maintain the condition that the finger is hooked on the second operating member.

The control system for a straddled electric vehicle further includes a mode switching member for switching between control modes of the control device. The steering device further includes a handlebar. The mode switching member is disposed directly behind the brake lever, while being disposed on a front surface of the handlebar. In this case, the operator is enabled to operate the mode switching member by any of the fingers of the hand holding the second handle grip.

The mode switching member may be disposed between the second handle grip and a pivot shaft of the second operating member. In this case, for instance, the operator is enabled to operate the mode switching member by a finger of the hand operating the second operating member.

The control modes executed by the control device may include a first mode and a second mode. The control device may control a rotational speed of the electric motor to be less than or equal to a first upper limit in the first mode. The control device may control the rotational speed of the electric motor to be less than or equal to a second upper limit greater than the first upper limit in the second mode. The control device may switch the first mode into the second mode in accordance with operating the mode switching member so as to control the rotational speed of the electric motor in the second mode. In this case, quasi-gear shifting can be realized by operating the mode switching member.

The mode switching member may be an operating member operable to be pressed from a front side of the handlebar to a rear side of the handlebar. In this case, the operator is enabled to easily operate the mode switching member by a finger of the hand operating the second operating member.

The first operating member may be disposed on the first handle grip. In this case, it is made easy for the operator to simultaneously operate the first operating member and the second operating member.

The control system for a straddled electric vehicle may further include a load adjusting device. The load adjusting device may make an operating load acting on the second operating member vary in accordance with an amount of reducing either the drive force or the regenerative brake force of the electric motor based on an operating amount of the second operating member. In this case, the operator is more likely to feel a sense of operating the second operating member than, for instance, when the operating load acting on the second operating member is constant. As a result, the second operating member can be enhanced in operability.

A straddled electric vehicle according to another aspect of the present invention includes an electric motor for driving a vehicle and the control system described above. Accordingly, it is made possible to provide the straddled electric vehicle including the control system described above.

Overall, according to the present invention, an operating member for controlling a drive force of an electric motor can be enhanced in operability in a control system for a straddled electric vehicle.

### BRIEF DESCRIPTION OF THE DRAWINGS

FIG. 1 is a side view of a straddled electric vehicle.
FIG. 2 is a plan view of part of a steering device.
FIG. 3 is a plan view of a left handle grip and the surroundings thereof.
FIG. 4 is a block diagram of a control system.
FIG. 5 is a chart exemplifying a relation between an operating amount of a second operating member and an operating load acting on the second operating member.
FIG. 6 is a chart exemplifying a relation between the operating amount of the second operating member and either a drive force or a regenerative brake force.
FIG. 7 is a schematic diagram for explaining a load adjusting device.
FIG. 8 is another schematic diagram for explaining the load adjusting device.
FIG. 9 is yet another schematic diagram for explaining the load adjusting device.
FIG. 10 is a chart for explaining characteristics of control modes executed by a control device.
FIG. 11 is a diagram schematically showing a state of a hand in operation of the second operating member.
FIG. 12 is a diagram schematically showing another state of the hand in operation of the second operating member.

### EMBODIMENTS OF THE INVENTION

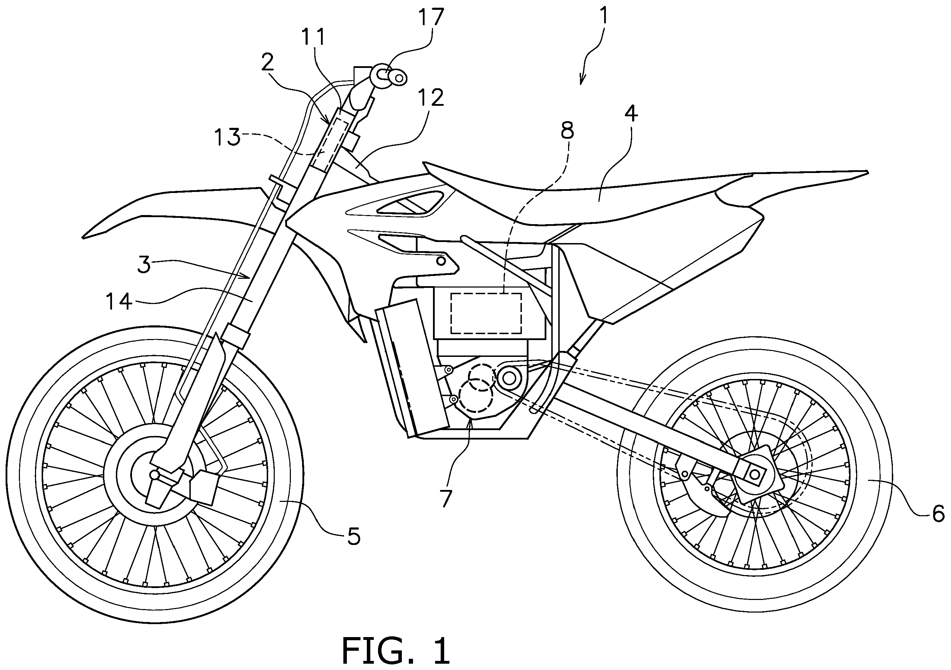

A control system for a straddled electric vehicle according to a preferred embodiment will be hereinafter explained with reference to drawings. FIG. 1 is a side view of a straddled electric vehicle 1 including a control system 10 according to the preferred embodiment. The straddled electric vehicle 1 is a two-wheeled electric vehicle. The straddled electric vehicle 1 may be another type of electric vehicle, for instance, a four-wheeled electric vehicle, a three-wheeled electric vehicle, electric snowmobile, or so forth.

The straddled electric vehicle 1 includes a vehicle body frame 2, a steering device 3, a seat 4, a front wheel 5, a rear wheel 6, an electric motor 7, and a battery 8.

The vehicle body frame 2 includes a head pipe 11 and a main frame 12. The head pipe 11 is disposed in the middle of the vehicle in a vehicle width direction. The main frame 12 is connected to the head pipe 11. The main frame 12 extends rearward from the head pipe 11.

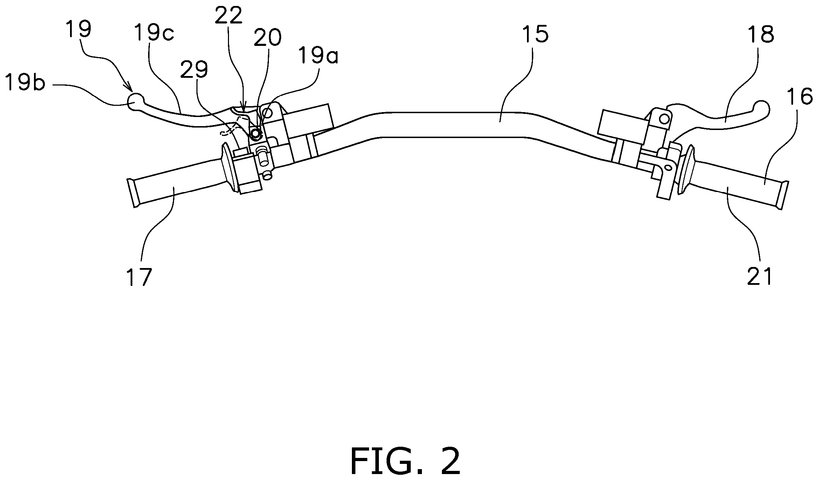

The steering device 3 is supported by the head pipe 11 so as to be turnable. The steering device 3 supports the front wheel 5 such that the front wheel 5 is made rotatable. As shown in FIGS. 1 and 2, the steering device 3 includes a steering shaft 13, a front fork 14, a handlebar 15, a first handle grip 16, a second handle grip 17, a first brake lever 18, and a second brake lever 19. The second brake lever 19 is an exemplary brake lever.

The steering shaft 13 is inserted into the head pipe 11. The front fork 14 is connected to the steering shaft 13 and supports the front wheel 5 such that the front wheel 5 is made rotatable.

The handlebar 15 extends in the vehicle width direction. The handlebar 15 is fixed to the steering shaft 13. The first and second handle grips 16 and 17 are holdable portions held by an operator. The first handle grip 16 is disposed on the right of the center in the vehicle width direction. The first handle grip 16 is disposed on the right end of the handlebar 15. The second handle grip 17 is disposed on the opposite side of the first handle grip 16 with reference to the center in the vehicle width direction. In other words, the second handle grip 17 is disposed on the left of the center in the vehicle width direction. The second handle grip 17 is disposed on the left end of the handlebar 15.

The first brake lever 18 is disposed directly in front of the first handle grip 16. The first brake lever 18 is an operating member for controlling braking of the front wheel 5.

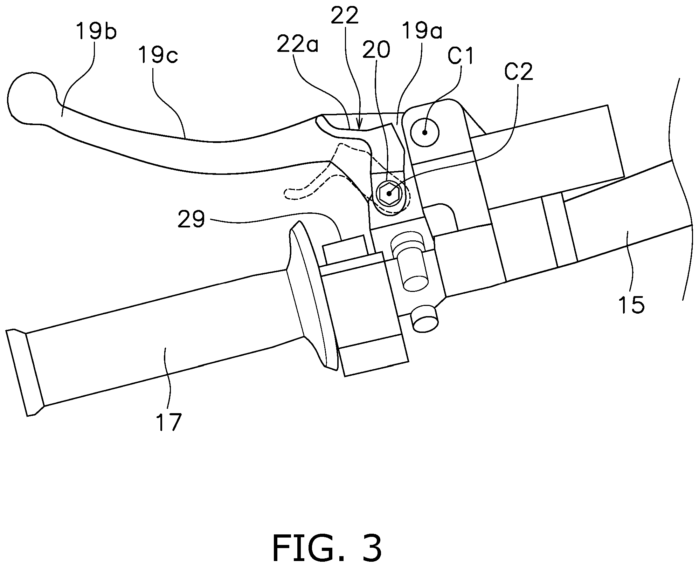

As shown in FIGS. 2 and 3, the second brake lever 19 is disposed directly in front of the second handle grip 17. The second brake lever 19 is an operating member for controlling braking of the rear wheel 6. The second brake lever 19 is made in shape of a lever. The second brake lever 19 has a pivot axis extending approximately in a vehicle up-and-down direction.

The second brake lever 19 includes a base end 19a, a distal end 19b, and a finger hooked portion 19c. The base end 19a is located on a vehicle width directional inner part of the second brake lever 19. The distal end 19b is disposed on the opposite side of the base end 19a and is located on a vehicle width directional outer part of the second brake lever 19.

The finger hooked portion 19c is a portion on which a finger of the operator is hooked. In the present preferred embodiment, the middle finger of the operator is hooked on the finger hooked portion 19c. The ring or little finger of the operator may be hooked on the finger hooked portion 19c. The front surface of the second brake lever 19 is provided in part as the finger hooked portion 19c. The finger hooked portion 19c is disposed between the base end 19a and the distal end 19b. The finger hooked portion 19c is disposed directly in front of the second handle grip 17. The finger hooked portion 19c is shaped to curve rearward. The finger hooked portion 19c is disposed further on the outer side than a mode switching member 29 (to be described) in the vehicle width direction. The second brake lever 19 has a pivot center C1 located in the vicinity of the base end 19a.

The seat 4 is disposed directly behind the head pipe 11. The front wheel 5 is supported by the front fork 14 so as to be rotatable. The rear wheel 6 is supported by the main frame 12 through a swing arm so as to be rotatable. The rear wheel 6 is rotated by a drive force generated by the electric motor 7.

The electric motor 7 is attached to the vehicle body frame 2. The electric motor 7 is connected to the rear wheel 6 through, for instance, a power transmission path composed of a reducer, a chain, and so forth. The electric motor 7 is driven by electric power supplied thereto from the battery 8. The electric motor 7 is, for instance, a three-phase alternating current motor. The electric motor 7 functions as a power generator caused to generate electric power by a rotational force of the rear wheel 6 in deceleration of the vehicle.

The battery 8 is disposed directly above the electric motor 7. The battery 8 supplies the electric power to the electric motor 7.

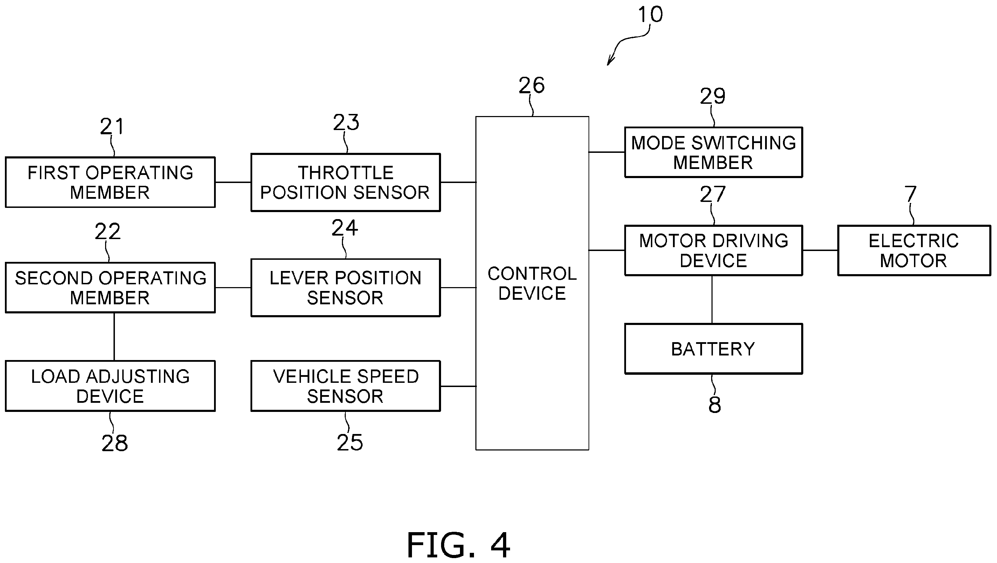

FIG. 4 is a block diagram of the control system 10. The control system 10 includes the second handle grip 17, the second brake lever 19, a first operating member 21, a second operating member 22, a throttle position sensor 23, a lever position sensor 24, a vehicle speed sensor 25, a control device 26, a motor driving device 27, a load adjusting device 28, and the mode switching member 29. It should be noted that in FIG. 4, the second handle grip 17 and the second brake lever 19 are omitted in illustration.

The first operating member 21 is disposed on the first handle grip 16. The first operating member 21 is an operating member for controlling the drive force of the electric motor 7 (a torque outputted from the electric motor 7). The first operating member 21 is a throttle grip twistable with respect to the handlebar 15. The first operating member 21 is unitarily twistable with the first handle grip 16.

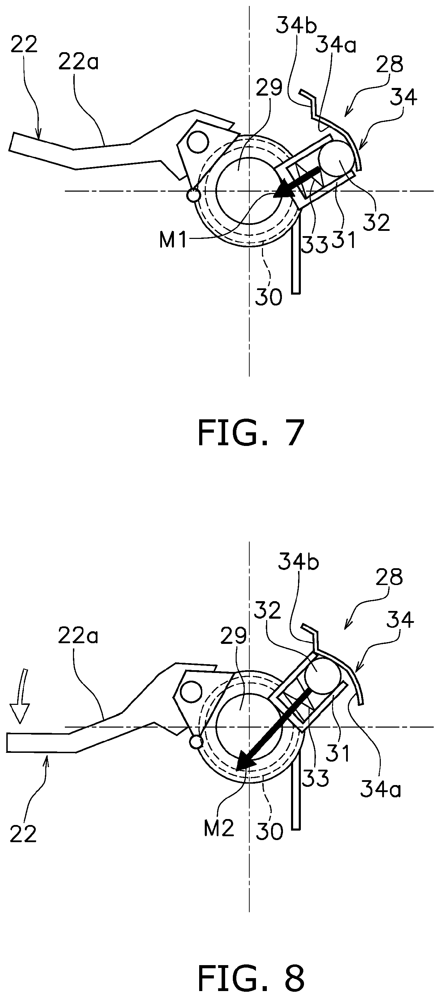

The second operating member 22 is an operating member for reducing either the drive force or a regenerative brake force of the electric motor 7. The second operating member 22 is operable in an operating range defined between a first position (depicted with solid line in FIGS. 2 and 3) and a second position (depicted with broken line in FIGS. 2 and 3). The first position corresponds to the initial position of the second operating member 22, whereas the second position corresponds to a position remote farthest from the first position. The second operating member 22 is operable to pivot between the first and second positions. The second operating member 22 is supported to be pivotable by, for instance, a pivot shaft 20 extending approximately in the vehicle up-and-down direction. The second operating member 22 is urged to the first position by, for instance, a torsion spring 30 (see FIG. 7).

The second operating member 22 is made in shape of a lever. The second operating member 22 is shaped to curve rearward. The second operating member 22 has a pivot center C2 different from the pivot center C1 of the second brake lever 19. The pivot center C2 of the second operating member 22 is located in the vicinity of the pivot center C1 of the second brake lever 19. The pivot center C2 of the second operating member 22 is located further on the outer side than the pivot center C1 of the second brake lever 19 in the vehicle width direction. The pivot center C2 of the second operating member 22 is located further on the vehicle rear side than the pivot center C1 of the second brake lever 19. The second operating member 22 has a pivot axis extending approximately in the vehicle up-and-down direction. The pivot axis of the second operating member 22 is arranged in parallel to that of the second brake lever 19. It should be noted that the pivot center C2 of the second operating member 22 may be identical in position to the pivot center C1 of the second brake lever 19.

The second operating member 22 is disposed directly above the second brake lever 19. The second operating member 22 is disposed directly above the base end 19a of the second brake lever 19. The second operating member 22 is disposed in adjacent to the second brake lever 19 in the vehicle up-and-down direction. The second operating member 22 overlaps with the second brake lever 19 in a vehicle plan view. In the present preferred embodiment, the second operating member 22 entirely overlaps with the second brake lever 19 in the vehicle plan view.

The second operating member 22 is lesser in dimension than the second brake lever 19 in the vehicle width direction. The second operating member 22 extends approximately in parallel to the second brake lever 19 in the vehicle plan view. The second operating member 22 is disposed further on the inner side than the finger hooked portion 19c of the second brake lever 19 in the vehicle width direction. The second operating member 22 is disposed further on the inner side than the mode switching member 29 in the vehicle width direction.

The second operating member 22 includes a finger hooked portion 22a. The finger hooked portion 22a is a portion on which a finger of the operator is hooked. The finger hooked on the finger hooked portion 22a is different from that hooked on the second brake lever 19. In the present preferred embodiment, the index finger of the operator is hooked on the finger hooked portion 22a. The front surface of the second operating member 22 is provided in part as the finger hooked portion 22a. The finger hooked portion 22a extends in the vehicle width direction. The finger hooked portion 22a is shaped to curve rearward. The finger hooked portion 22a overlaps with the second brake lever 19 in the vehicle plan view. As shown in FIG. 3, the second brake lever 19 protrudes forward from the finger hooked portion 22a in the vehicle plan view. The base end 19a of the second brake lever 19 more protrudes forward than the finger hooked portion 22a. The finger hooked portion 22a of the second operating member 22 is disposed at least in part further on the front side than the finger hooked portion 19c of the second brake lever 19.

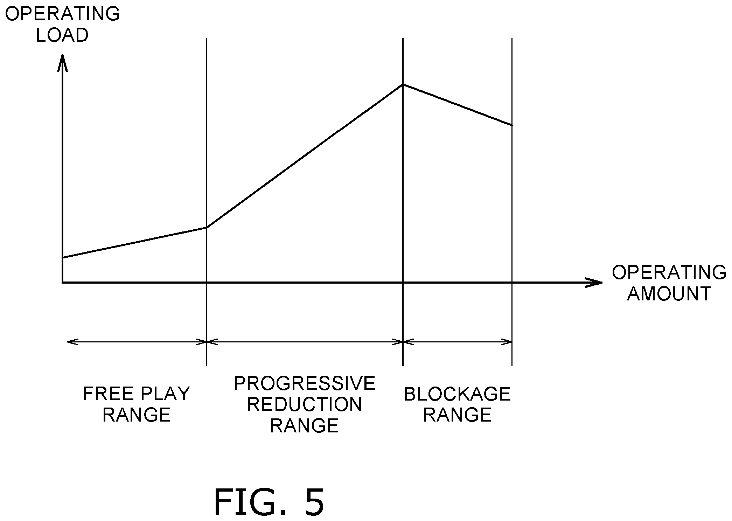

FIG. 5 is a chart exemplifying a relation between the operating amount of the second operating member 22 and the operating load acting on the second operating member 22. As shown in FIG. 5, in the present preferred embodiment, the operating range of the second operating member 22 is divided into three sub-ranges. When described in detail, the operating range of the second operating member 22 is composed of a free play range, a progressive reduction range, and a blockage range.

The free play range is a range defined between the first position and a progressive reduction position. The progressive reduction range is a range defined between the free play range and the blockage range. The blockage range is a range defined between the progressive reduction range and the second position. The operating amount of the second operating member 22 gradually increases with proximity of the second operating member 22 to the second position. The operating amount of the second operating member 22 corresponding to the progressive reduction range is greater than that corresponding to the free play range. The operating amount of the second operating member 22 corresponding to the blockage range is greater than that corresponding to the progressive reduction range.

The throttle position sensor 23 detects the operating amount (twisted position) of the first operating member 21 and outputs a signal to the control device 26 in accordance with the operating amount of the first operating member 21. The throttle position sensor 23 is, for instance, a potentiometer.

The lever position sensor 24 detects the operating amount (position) of the second operating member 22 and outputs a signal to the control device 26 in accordance with the operating amount of the second operating member 22. The lever position sensor 24 is, for instance, a potentiometer.

The vehicle speed sensor 25 detects the speed of the vehicle and outputs a signal to the control device 26 in accordance with the vehicle speed.

The control device 26 controls the drive force of the electric motor 7 in accordance with operating the first operating member 21. The control device 26 performs regenerative control for the electric motor 7 in deceleration of the vehicle. The control device 26 reduces either the drive force or the regenerative brake force of the electric motor 7 in accordance with operating the second operating member 22. The control device 26 controls the drive force of the electric motor 7 in accordance with the signal outputted from the throttle position sensor 23. The control device 26 reduces either the drive force or the regenerative brake force of the electric motor 7 in accordance with the signal outputted from the lever position sensor 24.

When the second operating member 22 is operated while the drive force of the electric motor 7 is controlled in accordance with operating the first operating member 21, the control device 26 reduces the drive force of the electric motor 7 in accordance with the operating amount of the second operating member 22.

When the second operating member 22 is operated while the vehicle decelerates by stopping operating the first operating member 21, the control device 26 reduces the regenerative brake force of the electric motor 7 in accordance with the operating amount of the second operating member 22.

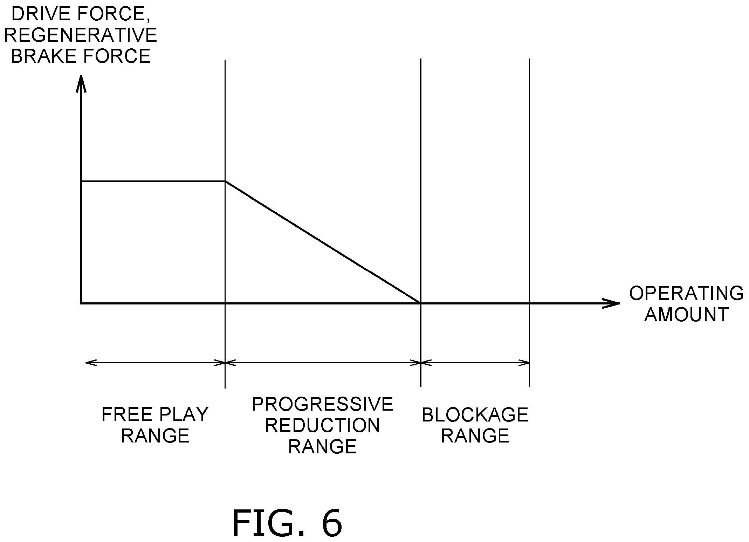

FIG. 6 is a chart exemplifying a relation between the operating amount of the second operating member 22 and either the drive force or the regenerative brake force of the electric motor 7. As shown in FIG. 6, when the operating amount of the second operating member 22 falls in the free play range, the control device 26 does not reduce either the drive force or the regenerative brake force of the electric motor 7. When the operating amount of the second operating member 22 falls in the progressive reduction range, the control device 26 reduces either the drive force or the regenerative brake force of the electric motor 7. The control device 26 gradually reduces either the drive force or the regenerative brake force of the electric motor 7 with proximity of the second operating member 22 to the second position in the progressive reduction range. In other words, the control device 26 gradually reduces either the drive force or the regenerative brake force of the electric motor 7 with increase in the operating amount of the second operating member 22 in the progressive reduction range. When the operating amount of the second operating member 22 falls in the blockage range, the control device 26 blocks either the drive force or the regenerative brake force of the electric motor 7.

The motor driving device 27 uses the electric power stored in the battery 8 so as to supply the electric motor 7 with electric power, the magnitude of which depends on a command value inputted thereto from the control device 26. The motor driving device 27 includes an inverter (not shown in the drawings). The motor driving device 27 converts direct current supplied thereto from the battery 8 into alternating current and supplies the alternating current to the electric motor 7. The motor driving device 27 causes the electric motor 7 to generate electric power in deceleration of the vehicle so as to supply the battery 8 and one or more other electric components with electric power, the magnitude of which depends on the command value inputted thereto from the control device 26. The motor driving device 27 includes a converter. In deceleration of the vehicle, the motor driving device 27 converts direct current obtained from the electric motor 7 into alternating current and supplies the alternating current to the battery 8 and the one or more other electric components.

The load adjusting device 28 makes the operating load acting on the second operating member 22 vary in accordance with an amount of reducing either the drive force or the regenerative brake force of the electric motor 7 based on the operating amount of the second operating member 22. It should be noted that in the following explanation, the operating load acting on the second operating member 22 will be simply referred to as the operating load. In the present preferred embodiment, the operating load corresponds to the sum of the urging force exerted by the torsion spring 30 and a moment of force exerted by the load adjusting device 28 on the second operating member 22.

As shown in FIG. 5, the load adjusting device 28 gradually increases the operating load with proximity of the second operating member 22 to the second position in the free play range. In other words, the load adjusting device 28 gradually increases the operating load with increase in the operating amount of the second operating member 22 in the free play range.

The load adjusting device 28 gradually increases the operating load with proximity of the second operating member 22 to the second position in the progressive reduction range. In other words, the load adjusting device 28 gradually increases the operating load with increase in the operating amount of the second operating member 22 in the progressive reduction range. As shown in FIG. 5, the load adjusting device 28 makes the operating load vary such that an increase rate of the operating load becomes greater in the progressive reduction range than in the free play range. When described in detail, the load adjusting device 28 makes the operating load vary such that a ratio of the increment in the operating load to that in the operating amount of the second operating member 22 becomes greater in the progressive reduction range than in the free play range.

The load adjusting device 28 adjusts the operating load in the blockage range to be lesser than the maximum operating load in the progressive reduction range. In other words, the load adjusting device 28 reduces the operating load when the operating amount of the second operating member 22 exceeds the progressive reduction range. In the present preferred embodiment, the load adjusting device 28 gradually reduces the operating load acting on the second operating member 22 with proximity of the second operating member 22 to the second position in the blockage range.

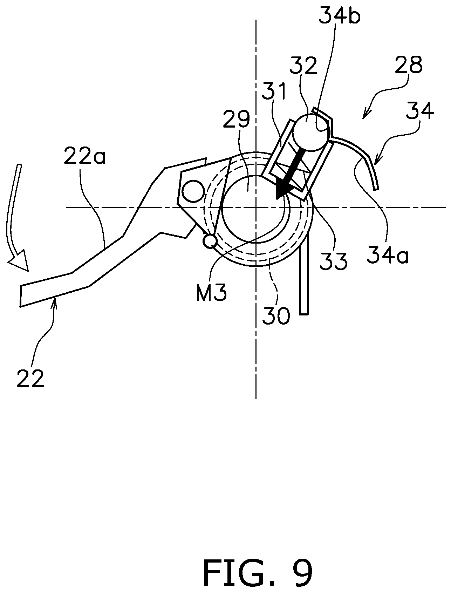

FIGS. 7 to 9 are schematic diagrams for explaining the load adjusting device 28. FIG. 7 shows a condition that the second operating member 22 is located in the free play range, FIG. 8 shows a condition that the second operating member 22 is located in the progressive reduction range, and FIG. 9 shows a condition that the second operating member 22 is located in a blockage position.

The load adjusting device 28 includes an accommodation portion 31, a ball 32, a coil spring 33, and a cam 34. The accommodation portion 31, the ball 32, and the coil spring 33 are unitarily moved with the second operating member 22. The accommodation portion 31 is fixed to the second operating member 22. The ball 32 is accommodated in part in the accommodation portion 31. The ball 32 contacts with the cam 34. The coil spring 33 is accommodated in the accommodation portion 31. The coil spring 33 urges the ball 32 against the cam 34.

The cam 34 is configured such that a force, exerted by the cam 34 on the ball 32 to press the ball 32, varies in magnitude in accordance with pivoting of the second operating member 22. The force, exerted by the cam 34 on the ball 32 to press the ball 32, acts in a direction that the operating load acting on the second operating member 22 increases. When described in detail, the force, exerted by the cam 34 on the ball 32 to press the ball 32, acts as the moment of force by which the second operating member 22 is pivoted clockwise in FIGS. 7 to 9.

The cam 34 includes a first cam surface 34a and a second cam surface 34b. The first cam surface 34a is configured to gradually increase the operating load with proximity of the second operating member 22 from the first position to the blockage range. The second cam surface 34b is disposed in adjacent to the first cam surface 34a. The ball 32 contacts with the first cam surface 34a when the second operating member 22 is located in the free play range and the progressive reduction range. The ball 32 contacts with the second cam surface 34b when the second operating member 22 is located in the blockage range.

As shown in FIGS. 7 and 8, a moment of force M2 is greater in magnitude than a moment of force M1. The moment of force M2 is exerted by the load adjusting device 28 to pivot the second operating member 22 clockwise in the progressive reduction range, whereas the moment of force M1 is exerted by the load adjusting device 28 to pivot the second operating member 22 clockwise in the free play range. The moment of force M2 gradually increases with proximity of the second operating member 22 to the second position.

As shown in FIG. 9, a moment of force M3 is lesser in magnitude than the moment of force M2. The moment of force M3 is exerted by the load adjusting device 28 to pivot the second operating member 22 clockwise when the ball 32 is moved from the first cam surface 34a to the second cam surface 34b, namely, when the second operating member 22 is moved from the progressive reduction position to the blockage position. It should be noted that the magnitude of the operating load in the blockage range is set such that the second operating member 22 is enabled to momentarily return to the first position against the operating load when the operator stops operating the second operating member 22. Besides, when the second operating member 22 is momentarily returned to the first position from the blockage range as a result of releasing the left hand of the operator from the second operating member 22, the control device 26 controls the electric motor 7 to output, for a predetermined period of time, a drive force greater in magnitude than a target drive force set in correspondence to the torque command value corresponding to the operating amount of the first operating member 21 and rotational speed of the electric motor 7.

The mode switching member 29 is a member for switching among control modes executed by the control device 26. For example, the mode switching member 29 is an operating member operable to be pressed from the front side of the handlebar 15 to the rear side of the handlebar 15.

The mode switching member 29 is disposed directly behind the second brake lever 19, while being disposed on the front surface of the handlebar 15. The mode switching member 29 is disposed directly behind the second operating member 22. The mode switching member 29 is disposed further on the inner side than the finger hooked portion 19c of the second brake lever 19 in the vehicle width direction. The mode switching member 29 is disposed between the second handle grip 17 and the pivot center C2 of the second operating member 22. The mode switching member 29 is disposed between the second handle grip 17 and the pivot shaft 20 of the second operating member 22.

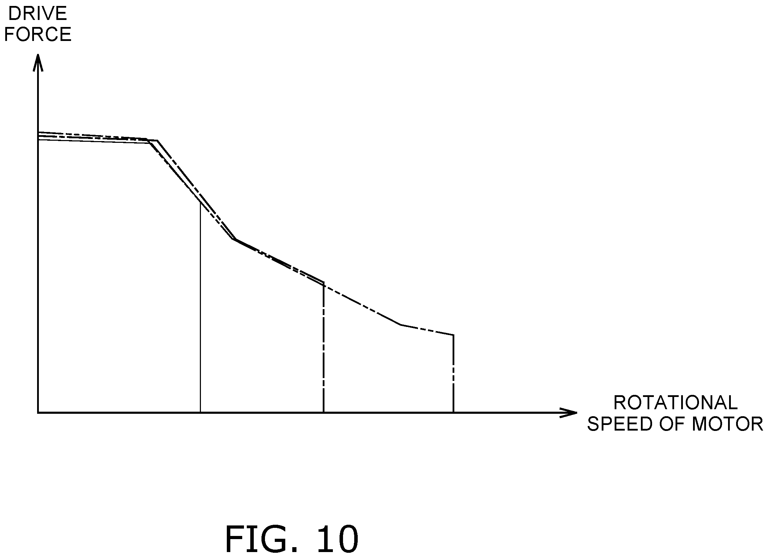

The control device 26 controls the rotational speed of the electric motor 7 in the control mode selected in accordance with operating the mode switching member 29. FIG. 10 is a diagram for explaining characteristics of the control modes executed by the control device 26. The control modes executed by the control device 26 are composed of a first mode, a second mode, and a third mode. In FIG. 10, the characteristic of the first mode is depicted with solid line, that of the second mode is depicted with dashed dotted line, and that of the third mode is depicted with dashed two-dotted line.

In the first mode, the control device 26 controls the rotational speed of the electric motor 7 to be less than or equal to a first upper limit. In the second mode, the control device 26 controls the rotational speed of the electric motor 7 to be less than or equal to a second upper limit. In the third mode, the control device 26 controls the rotational speed of the electric motor 7 to be less than or equal to a third upper limit. The rotational speed of the electric motor 7 corresponding to the second upper limit is greater than that corresponding to the first upper limit. The rotational speed of the electric motor 7 corresponding to the third upper limit is greater than that corresponding to the second upper limit.

For example, when the mode switching member 29 is operated, while the control device 26 controls the rotational speed of the electric motor 7 in the first mode, the control device 26 switches the first mode into the second mode so as to control the rotational speed of the electric motor 7 in the second mode. For example, when the mode switching member 29 is operated, while the control device 26 controls the rotational speed of the electric motor 7 in the second mode, the control device 26 switches the second mode into the first or third mode so as to control the rotational speed of the electric motor 7 in the first or third mode.

In the control system 10 according to the present aspect, the second operating member 22, provided for reducing either the drive force or the regenerative brake force of the electric motor 7, is disposed directly above the second brake lever 19. Accordingly, it is possible to inhibit occurrence of such a condition that, when operating the second operating member 22 during traveling, the operator unintentionally releases the thumb of the left hand operating the second operating member 22 away from the second handle grip 17: besides, the operator is enabled to simultaneously operate the second brake lever 19 and the second operating member 22. As a result, the second operating member 22 can be enhanced in operability.

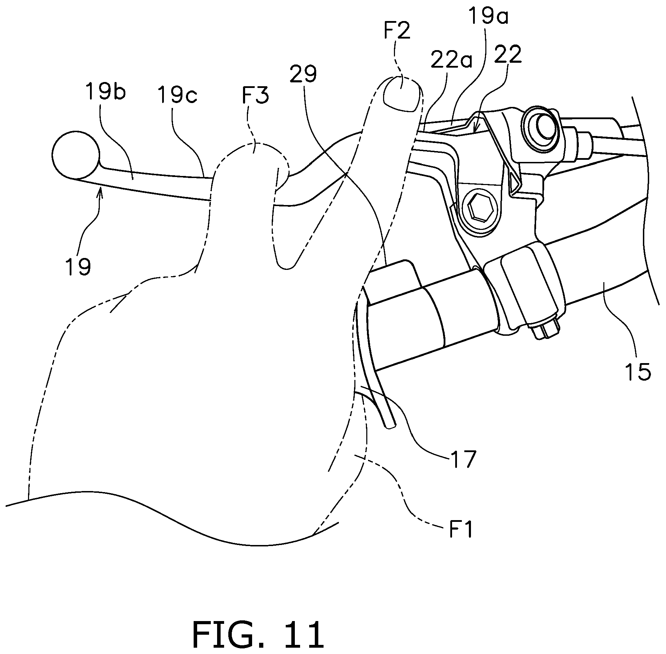

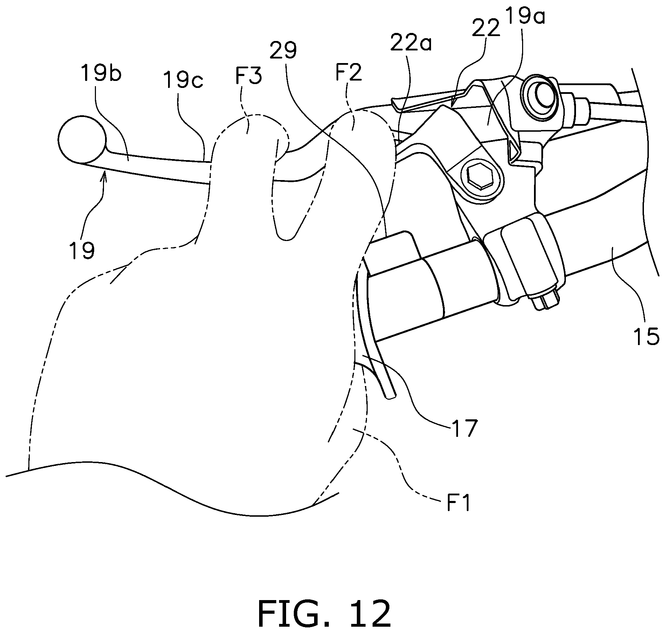

Specifically, as shown in FIGS. 11 and 12, the operator is enabled to operate the second operating member 22 with the index finger F2 (exemplary second finger), while holding the second handle grip 17 with the thumb F1, and simultaneously, hooking the middle finger F3 (exemplary first finger) on the second brake lever 19. Besides, as shown in FIG. 12, the operator is enabled to simultaneously operate the second brake lever 19 and the second operating member 22 during traveling, while holding the second handle grip 17 with the thumb F1 of the left hand operating the second operating member 22.

Especially, the second operating member 22 is disposed further on the inner side than the finger hooked portion 19c of the second brake lever 19 in the vehicle width direction; besides, the finger hooked portion 22a of the second operating member 22 is disposed at least in part further on the front side than the finger hooked portion 19c of the second brake lever 19. Because of this, the operator is enabled to easily operate only the second brake lever 19, while hooking the index finger F2 on the second operating member 22; by contrast, the operator is also enabled to easily operate only the second operating member 22, while hooking the middle finger F3 on the second brake lever 19.

The second brake lever 19 protrudes forward from the finger hooked portion 22a in the vehicle plan view; hence, the operator is enabled to put the finger, hooked on the finger hooked portion 22a of the second operating member 22, on the upper surface of the base end 19a of the second brake lever 19. Accordingly, the operator can stably maintain the condition that the finger is hooked on the second operating member 22.

The mode switching member 29 is disposed directly behind the second brake lever 19, while being disposed on the front surface of the handlebar 15; besides, the mode switching member 29 is operable to be pressed from the front side of the handlebar 15 to the rear side of the handlebar 15. Hence, the operator is enabled to easily operate the mode switching member 29 with the finger of the left hand operating the second operating member 22.

The second brake lever 19 may be an operating member for operating braking of the rear wheel 6.

The load adjusting device 28 may be omitted. The load adjusting device 28 may be changed in configuration. The cam 34 may be changed in positional arrangement and/or shape. The load adjusting device 28 may be configured to make the operating load acting on the second operating member 22 vary with an electric configuration.

The mode switching member 29 may be omitted. The mode switching member 29 may be changed in configuration. The mode switching member 29 may be a touch-operable or slide-operable operating member, or alternatively, may be a rocker switch.

### REFERENCE SIGNS LIST

- 1: Straddled electric vehicle
- 15: Handlebar
- 17: Second handle grip
- 19: Second brake lever (exemplary brake lever)
- 19c: Finger hooked portion
- 21: First operating member
- 22: Second operating member
- 22a: Finger hooked portion
- 26: Control device
- 28: Load adjusting device
- 29: Mode switching member

## Claims

1. A control system (10) for a straddled electric vehicle (1) including an electric motor (7) for driving a vehicle, the control system (10) comprising:
a steering device (3) including a first handle grip (16), a second handle grip (17), and a brake lever (19), the second handle grip (17) being disposed on an opposite side of the first handle grip (16) with reference to a center in a vehicle (1) width direction, the brake lever (19) disposed directly in front of the second handle grip (17);
a first operating member (21) for controlling a drive force of the electric motor (7);
a second operating member (22) for reducing either the drive force or a regenerative brake force of the electric motor (7), the second operating member (22) made in shape of a lever, the second operating member (22) disposed directly above the brake lever (19); and
a control device (26) controlling the drive force of the electric motor (7) in accordance with operating the first operating member (21), the control device (26) reducing either the drive force or the regenerative brake force of the electric motor (7) in accordance with operating the second operating member (22);
further comprising
a mode switching member (29) for switching between control modes of the control device (26), wherein
the steering device (3) further includes a handlebar (15), and
the mode switching member (29) is disposed directly behind the brake lever (19), the mode switching member (29) being disposed on a front surface of the handlebar (15).

2. The control system for a straddled electric vehicle (1) according to claim 1, wherein the second operating member (22) is lesser in dimension than the brake lever (19) in the vehicle width direction.

3. The control system for a straddled electric vehicle (1) according to claim 1 or 2, wherein the second operating member (22) is disposed in adjacent to the brake lever (19) in an up-and-down direction.

4. The control system for a straddled electric vehicle (1) according to any one of claims 1 to 3, wherein the second operating member (22) has a pivot center (C2) different from a pivot center (C1) of the brake lever (19).

5. The control system for a straddled electric vehicle (1) according to claim 4, wherein the pivot center (C2) of the second operating member (22) is located in vicinity of the pivot center (C1) of the brake lever (19).

6. The control system for a straddled electric vehicle (1) according to any one of claims 1 to 5, wherein the second operating member (22) extends approximately in parallel to the brake lever (19) in a vehicle plan view.

7. The control system for a straddled electric vehicle (1) according to any one of claims 1 to 6, wherein
the brake lever (19) includes a first finger hooked portion (19c) on which a first finger of an operator is hooked, and
the second operating member (22) is disposed further on an inner side than the first finger hooked portion (19c) of the brake lever (19) in the vehicle width direction.

8. The control system for a straddled electric vehicle (1) according to claim 7, wherein
the second operating member (22) includes a second finger hooked portion (22a) on which a second finger of the operator is hooked, the second finger different from the first finger, and
the second finger hooked portion (22a) of the second operating member (22) being disposed at least in part further on a front side than the first finger hooked portion (19c) of the brake lever (19).

9. The control system for a straddled electric vehicle (1) according to claim 7, wherein
the second operating member (22) includes a second finger hooked portion (22a) on which a second finger of the operator is hooked, the second finger different from the first finger, and
the brake lever (19) protrudes forward from the said second finger hooked portion (22a) of the second operating member (22) in a vehicle plan view.

10. The control system for a straddled electric vehicle (1) according to any one of the foregoing claims, wherein the mode switching member (29) is disposed between the second handle grip (17) and a pivot shaft (20) of the second operating member (22).

11. The control system for a straddled electric vehicle (1) according to any one of the foregoing claims, wherein
the control modes executed by the control device (26) include a first mode and a second mode, the control device (26) controlling a rotational speed of the electric motor (7) to be less than or equal to a first upper limit in the first mode, the control device (26) controlling the rotational speed of the electric motor (7) to be less than or equal to a second upper limit greater than the first upper limit in the second mode, and
the control device (26) switching the first mode into the second mode in accordance with operating the mode switching member (29) so as to control the rotational speed of the electric motor (7) in the second mode.

12. The control system for a straddled electric vehicle according to any one of the foregoing claims, wherein the mode switching member (29) is an operating member operable to be pressed from a front side of the handlebar (15) to a rear side of the handlebar (15).

13. The control system for a straddled electric vehicle according (1) to any one of the foregoing claims, wherein the first operating member (21) is disposed on the first handle grip (16).

14. The control system for a straddled electric vehicle (1) according to any one of the foregoing claims, further comprising:
a load adjusting device (28) making an operating load acting on the second operating member (22) vary in accordance with an amount of reducing either the drive force or the regenerative brake force of the electric motor (7) based on an operating amount of the second operating member (22).

15. A straddled electric vehicle (1) comprising:
an electric motor (7) for driving a vehicle (1); and
the control system (10) according to any one of the foregoing claims.

## Patentansprüche

1. Steuerungssystem (10) für ein Spreizsitz-Elektrofahrzeug (1), das einen Elektromotor (7) zum Antreiben eines Fahrzeugs enthält, wobei das Steuerungssystem (10) umfasst:
eine Lenkeinrichtung (3), die einen ersten Lenkergriff (16), einen zweiten Lenkergriff (17) sowie einen Bremshebel (19) enthält, wobei der zweite Lenkergriff (17) an einer in Bezug auf eine Mitte in einer Breitenrichtung des Fahrzeugs (1) gegenüberliegenden Seite des ersten Lenkergriffs (16) angeordnet ist und der Bremshebel (19) direkt vor dem zweiten Lenkergriff (17) angeordnet ist;
ein erstes Betätigungselement (21) zum Steuern einer Antriebskraft des Elektromotors (7);
ein zweites Betätigungselement (22) zum Reduzieren entweder der Antriebskraft oder einer regenerativen Bremskraft des Elektromotors (7), wobei das zweite Betätigungselement (22) in Form eines Hebels ausgebildet ist und das zweite Betätigungselement (22) direkt oberhalb des Bremshebels (19) angeordnet ist; sowie
eine Steuerungseinrichtung (26), die die Antriebskraft des Elektromotors (7) entsprechend Betätigung des ersten Betätigungselementes (21) steuert, wobei die Steuerungseinrichtung (26) entweder die Antriebskraft oder die regenerative Bremskraft des Elektromotors (7) entsprechend Betätigung des zweiten Betätigungselementes (22) reduziert;
wobei es des Weiteren umfasst:
ein Modus-Umschaltelement (29) zum Umschalten zwischen Steuermodi der Steuerungseinrichtung (26), wobei
die Lenkeinrichtung (3) des Weiteren eine Lenkstange (15) enthält, und
das Modus-Umschaltelement (29) direkt hinter dem Bremshebel (19) angeordnet ist und das Modus-Umschaltelement (29) an einer Vorderseite der Lenkstange (15) angeordnet ist.

2. Steuerungssystem für ein Spreizsitz-Elektrofahrzeug (1) nach Anspruch 1, wobei das zweite Betätigungselement (22) in der Breitenrichtung des Fahrzeugs eine kleinere Abmessung hat als der Bremshebel (19).

3. Steuerungssystem für ein Spreizsitz-Elektrofahrzeug (1) nach Anspruch 1oder 2, wobei das zweite Betätigungselement (22) in einer vertikalen Richtung an den Bremshebel (19) angrenzend angeordnet ist.

4. Steuerungssystem für ein Spreizsitz-Elektrofahrzeug (1) nach einem der Ansprüche 1 bis 3, wobei das zweite Betätigungselement (22) einen Drehmittelpunkt (C2) hat, der sich von einem Drehmittelpunkt (C1) des Bremshebels (19) unterscheidet.

5. Steuerungssystem für ein Spreizsitz-Elektrofahrzeug (1) nach Anspruch 4, wobei der Drehmittelpunkt (C2) des zweiten Betätigungselementes (22) sich in der Nähe des Drehmittelpunktes (C1) des Bremshebels (19) befindet.

6. Steuerungssystem für ein Spreizsitz-Elektrofahrzeug (1) nach einem der Ansprüche 1 bis 5, wobei sich das zweite Betätigungselement (22) in einer Draufsicht auf das Fahrzeug annähernd parallel zu dem Bremshebel (19) erstreckt.

7. Steuerungssystem für ein Spreizsitz-Elektrofahrzeug (1) nach einem der Ansprüche 1 bis 6, wobei
der Bremshebel (19) einen ersten Finger-Einhakabschnitt (19c) enthält, an dem ein erster Finger einer Bedienungsperson einhakt, und
das zweite Betätigungselement (22) in einer Breitenrichtung des Fahrzeugs näher an einer Innenseite angeordnet ist als der erste Finger-Einhakabschnitt (19c) des Bremshebels (19).

8. Steuerungssystem für ein Spreizsitz-Elektrofahrzeug (1) nach Anspruch 7, wobei
das zweite Betätigungselement (22) einen zweiten Finger-Einhakabschnitt (22a) enthält, an dem ein zweiter Finger der Bedienungsperson einhakt, wobei sich der zweite Finger von dem ersten Finger unterscheidet, und
der zweite Finger-Einhakabschnitt (22a) des zweiten Betätigungselementes (22) wenigstens teilweise weiter an einer Vorderseite angeordnet ist als der erste Finger-Einhakabschnitt (19c) des Bremshebels (19).

9. Steuerungssystem für ein Spreizsitz-Elektrofahrzeug (1) nach Anspruch 7, wobei
das zweite Betätigungselement (22) einen zweiten Finger-Einhakabschnitt (22a) enthält, an dem ein zweiter Finger der Bedienungsperson einhakt, wobei sich der zweite Finger von dem ersten Finger unterscheidet, und
der Bremshebel (19) in einer Draufsicht auf das Fahrzeug von dem zweiten Finger-Einhakabschnitt (22a) des zweiten Betätigungselementes (22) nach vorn vorsteht.

10. Steuerungssystem für ein Spreizsitz-Elektrofahrzeug (1) nach einem der vorangehenden Ansprüche, wobei das Modus-Umschaltelement (29) zwischen dem zweiten Lenkergriff (17) und einer Schwenkwelle (20) des zweiten Betätigungselementes (22) angeordnet ist.

11. Steuerungssystem für ein Spreizsitz-Elektrofahrzeug (1) nach einem der vorangehenden Ansprüche, wobei
die von der Steuerungseinrichtung (26) ausgeführten Steuerungsmodi einen ersten Modus und einen zweiten Modus einschließen,
die Steuerungseinrichtung (26) eine Drehzahl des Elektromotors (7) so steuert, dass sie in dem ersten Modus unter oder auf einer ersten oberen Grenze liegt, die Steuerungseinrichtung (26) die Drehzahl des Elektromotors (7) so steuert, dass sie in dem zweiten Modus unter oder auf einer zweiten oberen Grenze liegt, die über der ersten oberen Grenze liegt, und
die Steuerungseinrichtung (26) bei Betätigung des Modus-Umschaltelementes (29) den ersten Modus auf den zweiten Modus umschaltet, um die Drehzahl des Elektromotors (7) in dem zweiten Modus zu steuern.

12. Steuerungssystem für ein Spreizsitz-Elektrofahrzeug nach einem der vorangehenden Ansprüche, wobei das Modus-Umschaltelement (29) ein Betätigungselement ist, das so betätigt werden kann, dass es von einer vorderen Seite der Lenkstange (15) zu einer hinteren Seite der Lenkstange (15) gedrückt wird.

13. Steuerungssystem für ein Spreizsitz-Elektrofahrzeug (1) nach einem der vorangehenden Ansprüche, wobei das erste Betätigungselement (21) an dem ersten Lenkergriff (16) angeordnet ist.

14. Steuerungssystem für ein Spreizsitz-Elektrofahrzeug (1) nach einem der vorangehenden Ansprüche, das des Weiteren umfasst:
eine Last-Regulierungseinrichtung (28), die eine auf das zweite Betätigungselement (22) wirkende Betätigungslast basierend auf dem Maß von Betätigung des zweiten Betätigungselementes (22) entsprechend einem Maß variieren lässt, in dem entweder die Antriebskraft oder die regenerative Bremskraft des Elektromotors (7) reduziert wird.

15. Spreizsitz-Elektrofahrzeug (1), das umfasst:
einen Elektromotor (7) zum Antreiben eines Fahrzeugs (1); sowie
das Steuerungssystem (10) nach einem der vorangehenden Ansprüche.

## Revendications

1. Système de commande (10) pour un véhicule électrique à selle (1) comprenant un moteur électrique (7) pour entraîner un véhicule, le système de commande (10) comprenant :
un dispositif de direction (3) comprenant une première poignée (16), une seconde poignée (17) et un levier de frein (19), la seconde poignée (17) étant disposée du côté opposé de la première poignée (16) par rapport à un centre dans la direction de la largeur du véhicule (1), le levier de frein (19) étant disposé directement en face de la seconde poignée (17) ;
un premier organe d'actionnement (21) pour commander la force motrice du moteur électrique (7) ;
un second organe d'actionnement (22) pour réduire soit la force motrice soit la force de freinage régénératif du moteur électrique (7), le second organe d'actionnement (22) étant en forme de levier, et le second organe d'actionnement (22) étant disposé directement au-dessus du levier de frein (19) ; et
un dispositif de commande (26) commandant la force motrice du moteur électrique (7) conformément à l'actionnement du premier organe d'actionnement (21), le dispositif de commande (26) réduisant soit la force motrice soit la force de freinage régénératif du moteur électrique (7) conformément à l'actionnement du second organe d'actionnement (22) ;
comprenant en outre
un organe de commutation de mode (29) pour commuter entre des modes de commande du dispositif de commande (26), dans lequel
le dispositif de direction (3) comprend en outre un guidon (15), et
l'organe de commutation de mode (29) est disposé directement derrière le levier de frein (19), l'organe de commutation de mode (29) étant disposé sur une surface avant du guidon (15).

2. Système de commande pour un véhicule électrique à selle (1) selon la revendication 1, dans lequel le second organe d'actionnement (22) présente une dimension inférieure à celle du levier de frein (19) dans la direction de la largeur du véhicule.

3. Système de commande pour un véhicule électrique à selle (1) selon la revendication 1 ou 2, dans lequel le second organe d'actionnement (22) est disposé de manière adjacente au levier de frein (19) dans une direction de haut en bas.

4. Système de commande pour un véhicule électrique à selle (1) selon l'une quelconque des revendications 1 à 3, dans lequel le second organe d'actionnement (22) a un centre de pivotement (C2) différent du centre de pivotement (C1) du levier de frein (19).

5. Système de commande pour un véhicule électrique à selle (1) selon la revendication 4, dans lequel le centre de pivotement (C2) du second organe d'actionnement (22) est situé à proximité du centre de pivotement (C1) du levier de frein (19).

6. Système de commande pour un véhicule électrique à selle (1) selon l'une quelconque des revendications 1 à 5, dans lequel le second organe d'actionnement (22) s'étend de manière approximativement parallèle au levier de frein (19) dans une vue en plan du véhicule.

7. Système de commande pour un véhicule électrique à selle (1) selon l'une quelconque des revendications 1 à 6, dans lequel
le levier de frein (19) comprend une première partie d'accrochage pour doigt (19c) sur laquelle un premier doigt d'un opérateur vient s'accrocher, et
le second organe d'actionnement (22) est disposé plus vers le côté interne que la première partie d'accrochage pour doigt (19c) du levier de frein (19) dans la direction de la largeur du véhicule.

8. Système de commande pour un véhicule électrique à selle (1) selon la revendication 7, dans lequel
le second organe d'actionnement (22) comprend une seconde partie d'accrochage pour doigt (22a) sur laquelle un second doigt de l'opérateur vient s'accrocher, le second doigt étant différent du premier doigt, et
la seconde partie d'accrochage pour doigt (22a) du second organe d'actionnement (22) étant disposée, au moins en partie, plus loin sur un côté avant que la première partie d'accrochage pour doigt (19c) du levier de frein (19).

9. Système de commande pour un véhicule électrique à selle (1) selon la revendication 7, dans lequel
le second organe d'actionnement (22) comprend une seconde partie d'accrochage pour doigt (22a) sur laquelle un second doigt de l'opérateur vient s'accrocher, le second doigt étant différent du premier doigt, et
le levier de frein (19) fait saillie vers l'avant par rapport à ladite seconde partie d'accrochage pour doigt (22a) du second organe d'actionnement (22), dans une vue en plan du véhicule.

10. Système de commande pour un véhicule électrique à selle (1) selon l'une quelconque des revendications précédentes, dans lequel l'organe de commutation de mode (29) est disposé entre la seconde poignée (17) et un arbre de pivotement (20) du second organe d'actionnement (22).

11. Système de commande pour un véhicule électrique à selle (1) selon l'une quelconque des revendications précédentes, dans lequel
les modes de commande exécutés par le dispositif de commande (26) comprennent un premier mode et un second mode,
le dispositif de commande (26) commandant la vitesse de rotation du moteur électrique (7) pour qu'elle soit inférieure ou égale à une première limite supérieure dans le premier mode, le dispositif de commande (26) commandant la vitesse de rotation du moteur électrique (7) pour qu'elle soit inférieure ou égale à une seconde limite supérieure qui est supérieure à la première limite supérieure dans le second mode, et
le dispositif de commande (26) commutant le premier mode vers le second mode conformément à l'actionnement de l'organe de commutation de mode (29), de manière à commander la vitesse de rotation du moteur électrique (7) dans le second mode.

12. Système de commande pour un véhicule électrique à selle selon l'une quelconque des revendications précédentes, dans lequel l'organe de commutation de mode (29) est un organe d'actionnement pouvant être actionné pour être pressé depuis un côté face avant du guidon (15) vers un côté arrière du guidon (15).

13. Système de commande pour un véhicule électrique à selle (1) selon l'une quelconque des revendications précédentes, dans lequel le premier organe d'actionnement (21) est disposé sur la première poignée (16).

14. Système de commande pour un véhicule électrique à selle (1) selon l'une quelconque des revendications précédentes, comprenant en outre :
un dispositif de réglage de charge (28) faisant varier la charge d'actionnement agissant sur le second organe d'actionnement (22) conformément à une quantité de réduction soit de la force motrice, soit de la force de freinage régénératif du moteur électrique (7), sur la base d'une quantité d'actionnement du second organe d'actionnement (22).

15. Véhicule électrique à selle (1) comprenant :
un moteur électrique (7) pour entraîner un véhicule (1) ; et
le système de commande (10) selon l'une quelconque des revendications précédentes.
